Europäisches Patentamt

European Patent Office

Office européen des brevets

(19)

(11) Veröffentlichungsnummer: **0 350 703**

**A1**

(12) **EUROPÄISCHE PATENTANMELDUNG**

(21) Anmeldenummer: **89111604.8**

(22) Anmeldetag: **26.06.89**

(51) Int. Cl.⁴: **A01G 9/02 , A01G 13/02**

(30) Priorität: **12.07.88 DE 3823580**

(43) Veröffentlichungstag der Anmeldung:
**17.01.90 Patentblatt 90/03**

(84) Benannte Vertragsstaaten:
**AT BE CH FR GB IT LI LU NL SE**

(71) Anmelder: **Kupke, Jürgen**
**Sebastianusstrasse 29**
**D-5350 Euskirchen(DE)**

(72) Erfinder: **Kupke, Jürgen**
**Sebastianusstrasse 29**
**D-5350 Euskirchen(DE)**

(74) Vertreter: **Fechner, Joachim, Dr.-Ing.**
**Im Broeltal 118**
**D-5202 Hennef 1(DE)**

(54) **Deckel für Pflanzcontainer.**

(57) Der Deckel für Pflanzcontainer ist dadurch gekennzeichnet, daß in einer zur Öffnung des Containers (1) im wesentlichen passgenauen ersten Scheibe (2) aus biegsamem Material eine Durchbrechung
(10) ausgebildet ist, die sich von einem die Scheibenmitte (4) umfassenden Bereich nach außen zu
einem dem Scheibenrand (3) nahen Bereich erstreckt, ein Einführschnitt (5) vom Scheibenrand (3)
bis an die Durchbrechung (10) geführt ist und die
Durchbrechung (10) durch an ihrem Rande angeformte Laschen (8) oder eine zweite Scheibe abdeckbar ist, die kleiner als die erste Scheibe ist. Der
Deckel dient zur Verhinderung des Unkrautwachstums auf dem Erdballen der in dem Container wachsenden Pflanze. Der Deckel macht die Jätarbeit
überflüssig und vermeidet den Einsatz von Herbiziden.

FIG. 1

EP 0 350 703 A1

Die Erfindung betrifft einen Deckel für Pflanzcontainer zur Verhinderung des Unkrautwachstums auf dem Erdballen einer in dem Container wachsenden Pflanze, insbesondere eines Gehölzes.

In Baumschulen werden immer mehr Gehölze mit Erdballen in runde oder viereckige Container gepflanzt. Nach einer oder mehreren Wuchsperioden ist die Pflanze gut verwurzelt; sie kann dann einfach und vor allem zu jeder Jahreszeit verpflanzt werden. In Baumschulen stehen diese Behälter in sehr großer Anzahl nebeneinander. Dabei ist es erforderlich, den Erdballen feucht und unkrautfrei zu halten. Während die Bewässerung über Schläuche erfolgen kann, muß das Unkraut von Hand ausgejätet werden, oder es müssen Herbizide eingesetzt werden. Das Jäten ist arbeitsaufwendig; der Herbizideinsatz führt bei Unachtsamkeit zur Schädigung der Pflanzen und ist umweltschädlich. Die Unkräuter behindern die Wuchskraft der Nutzpflanze.

Aus der DE-GS 87 14 037.3 ist es bekannt, zur Verhinderung des Unkrautwachstums auf dem Erdballen einer Containerpflanze den Container mit einer über den Containerrand hinausragenden flexiblen Schürze aus lichtundurchlässigem Material abzudecken. Diese Schürze verhindert zwar das Unkrautwachstum, die Schürzenbefestigung am Container erfordert aber erhebliche Handarbeit. Wenn die Schürze mit einer den Arbeitsaufwand verringernden Befestigungseinrichtung, z.B. einem Federbügel ausgestattet wird, ergeben sich erhöhte Herstellungskosten.

Der vorliegenden Erfindung liegt die Aufgabe zu Grunde, einen Deckel für Pflanzcontainer zur Verhinderung des Unkrautwachstums auf dem Erdballen der in dem Container wachsenden Pflanze zu schaffen. Insbesondere soll ein Containerdeckel geschaffen werden, der die genannte Jätarbeit von Hand überflüssig macht, andererseits aber den Einsatz von Herbiziden vermeidet und der auch das Wachstum der Nutzpflanze nicht beeinträchtigt. Darüber hinaus soll der Deckel die Bewässerung des Wurzelballens über Schlauchleitung, Beregnung und/oder durch Regen ermöglichen. Insbesondere sollen schließlich der Arbeitsaufwand beim Einsatz des Deckels und die Herstellungs kosten des Deckels gering sein.

Diese Aufgabe wird bei dem eingangs genannten Deckel für Pflanzcontainer erfindungsgemäß dadurch gelöst, daß in einer zur Öffnung des Containers im wesentlichen passgenauen ersten Scheibe aus biegsamem Material eine Durchbrechung ausgebildet ist, die sich von einem die Scheibenmitte umfassenden Bereich nach außen zu einem dem Scheibenrand nahen Bereich erstreckt, ein Einführschnitt vom Scheibenrand bis an die Durchbrechung geführt ist und die Durchbrechung durch an ihrem Rande angeformte Laschen oder eine zweite Scheibe abdeckbar ist, die kleiner als die erste Scheibe ist.

Nach der bevorzugten Ausführungsform ist in der ersten Scheibe ein vom Scheibenrand über den Scheibenmittelpunkt oder an diesem vorbei verlaufender Einführschnitt ausgebildet und sind an wenigstens einer Seite des Einführschnitts in einem Bereich von einer Stelle in der Nähe des Scheibenrandes bis zu einer Stelle in Nähe des Scheibenmittelpunktes mehrere von dem Einführschnitt ausgehende, quer zu diesem unter Bildung der Laschen verlaufende Einschnitte vorgesehen. Die den Deckel bildende Scheibe hat die Form des Containerumfangs, so daß sie auf den Wurzelballen in den Container eingelegt werden kann. Hierbei wird die biegsame Scheibe am Einführschnitt soweit auseinander gebogen, daß der Pflanzenstamm in den Laschenbereich eingeführt werden kann. Die der Dicke des Pflanzenstamms entsprechende Anzahl von Laschen wird hochgebogen, und die Scheibe wird dicht auf den Wurzelballen aufgelegt. Die hochgebogenen Laschen liegen federnd an dem Pflanzenstamm an und bewirken eine gewisse Festlegung der Scheibe auf dem Erdballen. Wesentlich ist, daß die Laschenreihe sich über einen solchen radialen Bereich erstreckt, daß die oben erläuterte Abdeckung auch dann möglich ist, wenn die Pflanze mehr oder weniger exzentrisch in dem Container steht. Die durch die vorzugsweise parallelen Einschnitte gebildeten Laschen reichen daher von einem zentralen Bereich, der bei mittiger Position des Stamms zur Anwendung kommt, bis zu einem Bereich nahe dem Scheibenrand, jedoch mit Abstand von diesem, der bei der größtmöglichen exzentrischen Anordnung des Gehölzstamms im Container zur Anwendung kommt.

Bei dieser bevorzugten Ausführungsform des Deckels ist die Scheibe zwischen den Enden der quer verlaufenden Einschnitte durch eine Perforation oder in anderer Weise geschwächt. Die durch die vorzugsweise parallelen Einschnitte gebildeten Laschen lassen sich durch die Perforation oder andere Schwächungslinien leicht hochbiegen. Da die auf den Erdballen aufgelegte Scheibe der Containerwandung innenseitig anliegt, entsteht durch die hochgebogene, dem Gehölzstamm federnd anliegende Lasche(n) eine Verspannung der Scheibe in dem Container, die eine Verschiebung der Scheibe oder ihr Abheben von dem Ballen z.B. infolge Windeinwirkung verhindert.

Zweckmäßigerweise sind die beiden durch den Einführschnitt am Scheibenrand gebildeten Ecken abgerundet. Hierdurch wird die Einführung des Gehölzstamms in die Scheibe bzw. das Auflegen der Scheibe auf den Wurzelballen erleichtert.

Die Form der Scheibe kann kreisrund sein, wobei der Einführschnitt seitlich am Kreismittelpunkt vorbei verläuft und die Einschnitte auf einer Seite des Einführschnitts ausgebildet sind. Da in diesem Fall der Einführschnitt exzentrisch verläuft, ist es ausreichend, daß die Laschen nur auf einer Seite des Einführschnitts liegen, auf der sich auch der Kreismittelpunkt befindet. Dieser Deckel wird in runde Container eingelegt.

Bei einer anderen Ausführungsform ist die Form der Scheibe quadratisch mit abgerundeten Ecken, verläuft der Einführschnitt seitlich am Mittelpunkt vorbei und sind die Einschnitte beiderseits des Einführschnitts ausgebildet. Da der quadratische Deckel im Gegensatz zu einem kreisrunden Deckel in dem Container nicht beliebig gedreht werden kann, sondern nur in vier jeweils um 90° versetzten Positionen auf den Erdballen aufgelegt werden kann, ist es für die Abdeckung bei allen vorkommenden exzentrischen Positionen des Gehölzstamms zweckmäßig, die Laschen auf beiden Seiten des Einführschnitts vorzusehen.

Bei einer anderen Ausführungsform des erfindungsgemäßen Deckels ist in der kleineren Scheibe aus ebenfalls biegsamem Material eine kleinere Durchbrechung sowie ein vom Scheibenrand zu dieser Durchbrechung verlaufender Einführschnitt ausgebildet, wobei die Dimension der Durchbrechung plus ihr größter Abstand vom Scheibenrand etwa gleich oder größer ist als die radiale Ausdehnung der Durchbrechung der größeren Scheibe. Zunächst wird die größere, der Kontour des Containers angepasste Scheibe auf den Erdballen gelegt, wobei wiederum die Scheibe am Einführschnitt so auseinandergebogen wird, daß der Gehölzstamm durch den Schnitt geführt werden kann. Die Durchbrechung dieser Scheibe kann aus der Umgebung des Mittelpunkts bis in einen randnahen Bereich reichen, so daß der Gehölzstamm bei allen vorkommenden exzentrischen Positionen in dem Container in der Durchbrechung Platz finden kann. Diese Durchbrechung der größeren Scheibe kann bei einer kreisrunden Scheibe z.B. in radialer Richtung länglich ausgebildet sein, da diese Scheibe eine beliebige Drehlage zum Container einnehmen kann. Bei einer quadratischen oder anderen mehreckigen Scheibe ist die Durchbrechung zweckmäßigerweise kreisrund, da in diesem Falle die Scheibe nur in vier bzw. mehreren bestimmten Positionen relativ zum Container auf den Wurzelballen aufgelegt werden kann, aber alle beliebigen exzentrischen Positionen des Gehölzstamms in der Durchbrechung Platz finden müssen. Auf die so auf den Wurzelballen aufgelegte größere Scheibe wird nunmehr eine zweite kleinere Scheibe aufgelegt, die ähnlich ausgebildet ist wie die größere Scheibe, jedoch eine wesentlich kleinere Durchbrechung hat, die zwar den Durchtritt des Gehölzstamms erlaubt, darüber hinaus jedoch möglichst wenig Öffnung freiläßt. Diese kleinere Scheibe wird auf die größere Scheibe in einer solchen Drehposition aufgelegt, daß sie die Durchbrechung der größeren Scheibe praktisch vollständig abdeckt. Damit dies möglich ist, muß die Dimension der Durchbrechung der kleineren Scheibe plus der größte Abstand dieser Durchbrechung vom Scheibenrand wenigstens gleich der maximalen radialen Ausdehnung der Durchbrechung der größeren Scheibe sein. Durch Drehen der kleineren Scheibe ist es dann möglich, die letztere in eine solche Drehlage zu bringen, daß die Durchbrechung der größeren Scheibe voll ständig abgedeckt wird.

Vorzugsweise ist bei dieser Ausführungsform an der Durchbrechung der kleineren Scheibe durch zwei Einschnitte eine hochklappbare Lasche gebildet. Durch diese Lasche kann die Durchbrechung der kleineren Scheibe unterschiedlichen Dicken des Gehölzstamms angepaßt werden. Bei dünneren Stämmen bleibt die Lasche in der Scheibenebene, d.h. sie wird nicht hochgeklappt. Wenn bei dickeren Stämmen die so bestehende Durchbrechung nicht ausreicht, wird die Lasche hochgeklappt, wobei durch die federnde Anlage an dem Gehölzstamm noch eine gewisse Festlegung der kleineren Scheibe erfolgt.

Vorzugsweise besteht die Deckelscheibe bzw. die große und die kleinere Scheibe des zweiteiligen Deckels aus einem verrottbaren Material, wie z.B. Pappe, oder aus Kunststoff. Die Lebensdauer der Pappe soll z.B. 2 bis 3 Jahre betragen. Der Deckel verbleibt auf dem Container, wenn dieser mit der Pflanze von der Baumschule verkauft wird. Ein Kunststoffdeckel wird vor dem Verkauf des Containers abgenommen und in der Baumschule wieder eingesetzt. Zweckmäßigerweise bestehen die Scheibe(n) aus einem verrottbaren Material einer Dicke in dem Bereich von 0,1 bis 5 mm, vorzugsweise 0,3 bis 2,0 mm.

Nachfolgend werden drei Ausführungsformen des erfindungsgemäßen Deckels an Hand der Zeichnung näher beschrieben. Es zeigen

Figur 1 einen gefüllten Pflanzcontainer mit einer ersten Ausführungsform des erfindungsgemäßen, auf den Erdballen aufgesetzten Containerdeckels in perspektivischer Darstellung;

Figur 2 eine Draufsicht des aus Figur 1 ersichtlichen Deckels;

Figur 3 eine Draufsicht einer zweiten Ausführungsform des erfindungsgemäßen Deckels für viereckige Container;

Figur 4 einen gefüllten Pflanzcontainer mit einer dritten Ausführungsform des erfindungsgemäßen Zwei-Scheiben-Deckels in perspektivischer Darstellung;

Figur 5 die Draufsicht der unteren Scheibe des in Figur 4 gezeigten Deckels; und

Figur 6 die Draufsicht der oberen Scheibe des aus Figur 4 ersichtlichen Deckels.

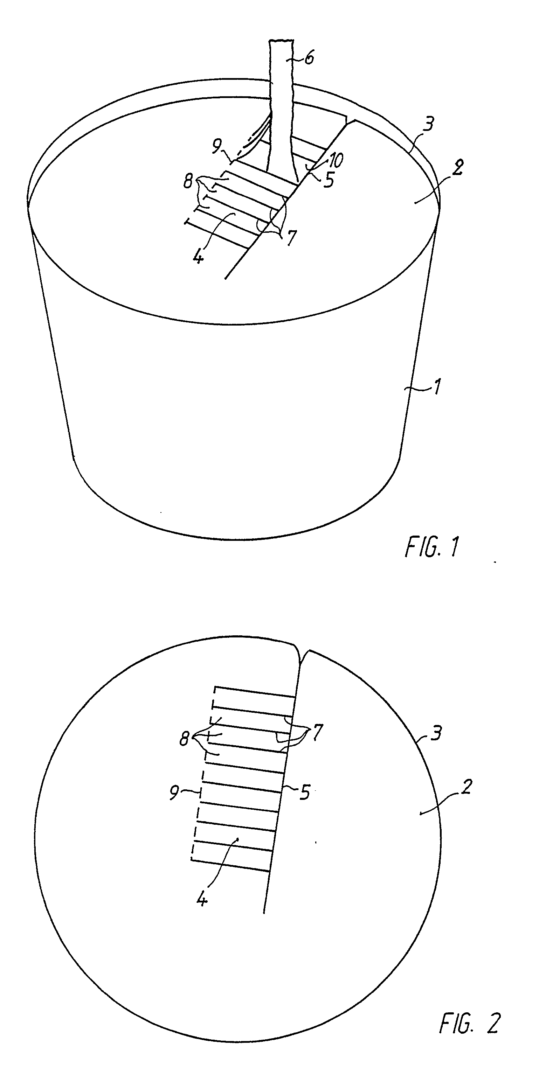

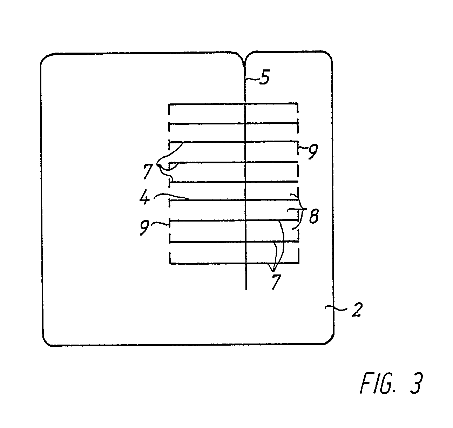

Bei der Ausführungsform nach den Figuren 1 und 2 besteht der Deckel aus einer kreisrunden Scheibe 2, die in Figur 1 zum Zwecke der Abdeckung des Erdballens in einen schwach kegelstumpfförmigen Container 1 eingelegt ist. Die Scheibe 2 hat einen vom Scheibenrand 3 ausgehenden, mit Abstand am Scheibenmittelpunkt 4 vorbeiführenden, geradlinigen Einführschnitt 5. Die zwischen dem Scheibenrand 3 und dem Einführschnitt 5 gebildeten Ecken sind abgerundet, um die Einführung des Gehölzstamms 6 in den Einschnitt 5 zu erleichtern. Rechtwinklig zu dem Einführschnitt 5 sind mehrere, untereinander parallele Einschnitte 7 ausgebildet, durch die rechteckige, hochbiegbare Laschen 8 gebildet sind und praktisch eine Scheibendurchbrechung 10 entsteht. An der dem Einführschnitt gegenüberliegenden Seite der Laschen 8 verläuft eine Perforationslinie 9, die das Aufbiegen der Laschen 8 erleichtert.

Zum Einsetzen des Deckels in den Container 1 wird die Scheibe 2 zunächst längs des Einführschnitts 5 auseinandergebogen, so daß der Gehölzstamm 6 bis in den Bereich der Laschen 8 in die Scheibe eingeführt werden kann. Der Stamm 6 ist soweit in den Laschenbereich einzuführen, daß die Scheibe 2 gegebenenfalls nach gewisser Drehung passgenau in die Öffnung des Containers eingesetzt werden kann und diese abdeckt. Dabei werden je nach Dicke des Stamms 6 eine oder mehrere Laschen 8 hochgebogen, wobei sie dem Stamm anliegen, wie dies aus Figur 1 für zwei Laschen 8 ersichtlich ist. Die dem Stamm 6 anliegenden Laschen 8 tragen mit dazu bei, daß die Scheibe 2 in der in Figur 1 dargestellten Auflage auf dem Erdballen gehalten wird. Durch Übereinanderlegen der Ränder des Schnitts 5 ist eine Anpassung an die Form des Containers möglich, wenn sich dieser durch den Erdballen und/oder die Wurzelentwicklung verformt hat.

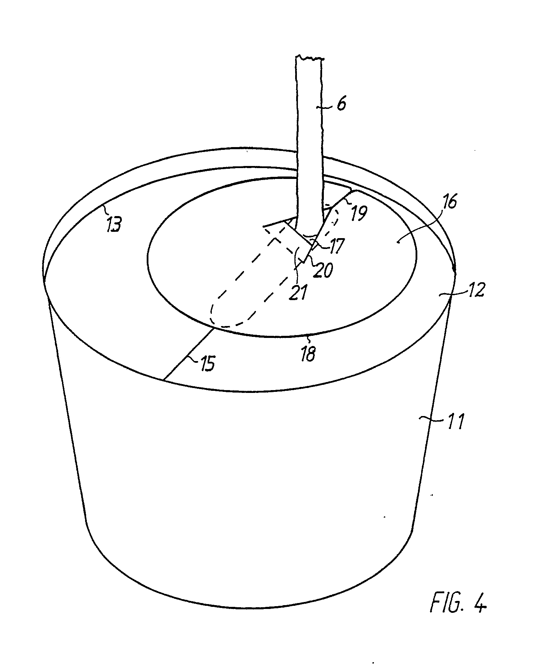

Figur 3 zeigt einen ähnlichen Deckel wie Figur 2, jedoch für einen viereckigen Container. Ein wesentlicher Unterschied gegenüber dem Deckel nach Figur 1 und 2 besteht ferner darin, daß die Laschen 8 beiderseits des Einführschnitts gebildet sind. Die so gelaschte Fläche der Scheibe 2 ermöglicht es, die viereckige Containeroberfläche bei allen praktisch vorkommenden exzentrischen Positionen des Stamms 6 vollständig abzudecken, so daß das Unkrautwachstum unterbunden wird. Je nach Position des Gehölzstamms in dem Container werden dabei die Laschen 8 auf der einen Seite des Einführschnitts 5 oder auf der anderen Seite des Einführschnitts 5 oder auf beiden Seiten des Einführschnitts 5 angehoben und am Stamm zur Anlage gebracht.

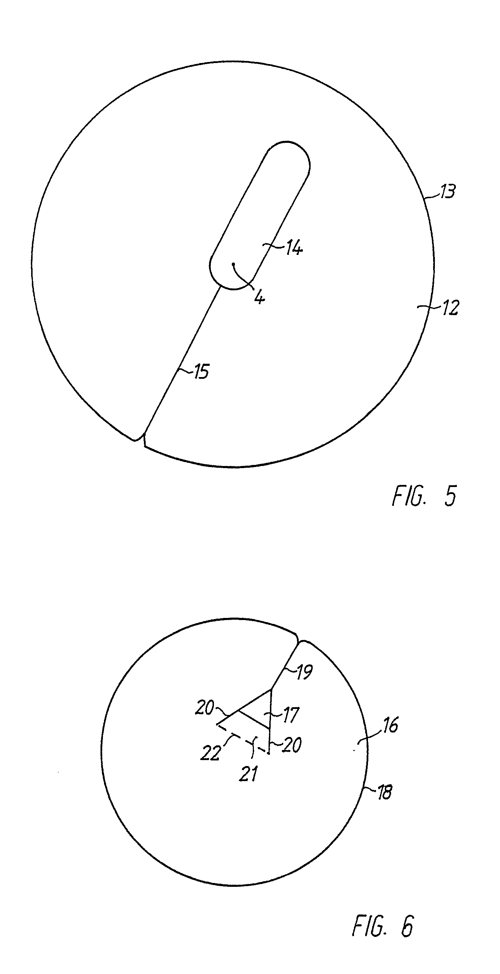

Bei der in den Figuren 4 bis 6 gezeigten Ausführungsform besteht der Deckel aus einer größeren Scheibe 12, die der Öffnung des Containers 11 im wesentlichen angepaßt ist, und einer wesentlich kleineren Scheibe 16. Bei dieser Ausführungsform sind beide Scheiben 12,16 kreisrund, jedoch sind andere Formen möglich. Insbesondere kann die größere Scheibe 12 entsprechend der Containerform auch im wesentlichen viereckig sein. Die in dem Container 11 auf dem Erdballen zuunterst liegende größere Scheibe 12 hat eine längliche Durchbrechung 14 (Figur 5), die sich aus dem Bereich der Scheibenmitte 4 radial nach außen bis auf einen gewissen Abstand vom Scheibenrand 13 erstreckt. Dieses Langloch 14 gestattet das Abdekken des Containers 11 bei der zentralen Position und bei allen vorkommenden exzentrischen Positionen des Gehölzstamms 6. Um den Stamm 6 in das Langloch 14 einzuführen bzw. die Scheibe 12 um den Stamm 6 herumzulegen, ist ein Einführschnitt 15 vom Scheibenrand 13 an die längliche Durchbrechung geführt, wobei die Ecken zwischen dem Rand 13 und dem Schnitt 15 wiederum abgerundet sind. Da die Scheiben aus einem flexiblen Material, wie z.B. Pappe oder Kunststoff bestehen, kann der Einführschnitt 15 auseinandergebogen werden, so daß der Stamm durch den Schnitt in das Langloch 14 gelangen kann. Die Scheibe 12 wird dann oberhalb des Containers 11 so gedreht, daß sie bei der gegebenen Exzentrizität des Stamms 6 genau in die Öffnung des Containers 11 passt. Um auch die längliche Durchbrechung 14 möglichst weitgehend abzudecken, ist eine kleinere kreisförmige Platte 16 vorgesehen, die eine dreieckige Durchbrechung 17 und einen vom Plattenrand 18 an die dreieckige Durchbrechung 17 geführten Einführschnitt 19 aufweist. Nachdem die Scheibe 12 in der oben dargelegten Weise in die Öffnung des Containers 11 eingesetzt wurde, wird die Scheibe 16 an dem Einführschnitt 19 auseinandergebogen und dabei der Stamm 6 in die dreieckige Öffnung 17 eingeführt. Die Scheibe 16 wird dann auf die Scheibe 12 in einer solchen Drehlage aufgelegt, daß die längliche Durchbrechung 14 bedeckt ist. In der Scheibe 16 sind in Verlängerung zweier Kanten der Durchbrechung 17 Schnitte 20' ausgebildet, durch die eine trapezförmige Lasche 21 gebildet wird. Die Lasche 21 hängt über die Perforation 22 mit der Scheibe 16 zusammen und kann um die Perforation 22 hochgebogen werden. Dadurch kann die dreieckige Durchbrechung 17 entsprechend dem Querschnitt des Stamms 6 vergrößert werden, wenn dies erforderlich ist. Die Lasche 21 legt sich dabei federnd gegen den Stamm 6 und bewirkt eine gewisse Festlegung der Scheibe 16 auf der Scheibe 12.

Bei der in den Figuren 4 bis 6 dargestellten Ausführungsform ist die Durchbrechung 14 in der Scheibe 12 als radiales Langloch und die Durchbrechung 17 der Scheibe 16 dreieckig ausgebildet. Die Durchbrechungen 14 und 17 können jedoch andere Formen haben. Beispielsweise kann die Durchbrechung 14 konzentrisch zum Scheibenmittelpunkt 4 kreisrund sein, insbesondere, wenn die Scheibe 12 im wesentlichen viereckig ist. Wesentlich ist jedoch, daß der Maximalabstand der Durchbrechung 17 von dem Rand 18 der Scheibe 16 auch bei extremer Exzentrizität des Stamms 6 im Container ausreicht, um die Durchbrechung 14 der Platte 12 im wesentlichen vollständig abzudecken.

## Ansprüche

1. Deckel für Pflanzcontainer zur Verhinderung des Unkrautwachstums auf dem Erdballen einer in dem Container wachsenden Pflanze, insbesondere eines Gehölzes, dadurch gekennzeichnet, daß in einer zur Öffnung des Containers (1;11) im wesentlichen passgenauen ersten Scheibe (2; 12) aus biegsamem Material eine Durchbrechung (10;14) ausgebildet ist, die sich von einem die Scheibenmitte (4) umfassenden Bereich nach außen zu einem dem Scheibenrand (3;13) nahen Bereich erstreckt, ein Einführschnitt (5;15) vom Scheibenrand (3;13) bis an die Durchbrechung (10;14) geführt ist und die Durchbrechung (10;14) durch an ihrem Rande angeformte Laschen (8) oder eine zweite Scheibe (16) abdeckbar ist, die kleiner als die erste Scheibe (12) ist.

2. Deckel nach Anspruch 1, dadurch gekennzeichnet, daß in der ersten Scheibe (2) ein vom Scheibenrand (3) über den Scheibenmittelpunkt (4) oder an diesem vorbei verlaufender Einführschnitt (5) ausgebildet ist und an wenigstens einer Seite des Einführschnitts (5) in einem Bereich von einer Stelle in der Nähe des Scheibenrandes (3) bis zu einer Stelle in Nähe des Scheibenmittelpunktes (4) mehrere von dem Einführschnitt (5) ausgehende, quer zu diesem unter Bildung der Laschen (8) verlaufende Einschnitte (7) vorgesehen sind.

3. Deckel nach Anspruch 2, dadurch gekennzeichnet, daß die Scheibe (2) zwischen den Enden der quer verlaufenden Einschnitte (7) durch eine Perforation (9) oder in anderer Weise geschwächt ist.

4. Deckel nach Anspruch 2 oder 3, dadurch gekennzeichnet, daß die beiden durch den Einführschnitt (5) am Scheibenrand (3) gebildeten Ecken abgerundet sind.

5. Deckel nach einem der Ansprüche 2 bis 4, dadurch gekennzeichnet, daß die Form der Scheibe (2) kreisrund ist, der Einführschnitt (5) seitlich am Kreismittelpunkt (4) vorbei verläuft und die Einschnitte (7) auf einer Seite des Einführschnitts (5) ausgebildet sind.

6. Deckel nach einem der Ansprüche 2 bis 4, dadurch gekennzeichnet, daß die Form der Scheibe (2) quadratisch mit abgerundeten Ecken ist, der Einführschnitt (5) seitlich am Mittelpunkt (4) vorbei verläuft und die Einschnitte (7) beiderseits des Einführschnitts (5) ausgebildet sind.

7. Deckel nach Anspruch 1, dadurch gekennzeichnet, daß in der kleineren Scheibe (16) aus ebenfalls biegsamem Material eine kleinere Durchbrechung (17) sowie ein vom Scheibenrand (18) zu dieser Durchbrechung (17) verlaufender Einführschnitt (19) ausgebildet ist, wobei die Dimension der Durchbrechung (17) plus ihr größter Abstand vom Scheibenrand (18) etwa gleich oder größer ist als die radiale Ausdehnung der Durchbrechung (14) der größeren Scheibe (12).

8. Deckel nach Anspruch 7, dadurch gekennzeichnet, daß die kleinere Scheibe (16) in einer solchen Drehposition der größeren Scheibe (12) aufliegt, daß die Durchbrechung (14) der größeren Scheibe bis auf die Durchbrechung (17) von der kleineren Scheibe (16) abgedeckt ist.

9. Deckel nach Anspruch 7 oder 8, dadurch gekennzeichnet, daß an der Durchbrechung (17) der kleineren Scheibe (16) durch zwei Einschnitte (20) eine hochklappbare Lasche (21) gebildet ist.

10. Deckel nach einem der Ansprüche 1 bis 9, dadurch gekennzeichnet, daß die Scheibe(n) (2;12,16) aus eienm verrottbaren Material, wie Pappe, oder aus Kunststoff bestehen.

11. Deckel nach einem der Ansprüche 1 bis 10, dadurch gekennzeichnet, daß die Scheibe(n) (2;12,16) aus einem verrottbaren Material in einer Dicke in dem Bereich von 0,1 bis 5 mm, vorzugsweise von 0,3 bis 2,0 mm bestehen.

FIG. 1

FIG. 2

FIG. 3

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2120068 (SANDOR) <br> * Seite 1, Zeilen 56 - 80 * <br> * Seite 1, Zeile 106 - Seite 2, Zeile 10; Figuren 1-4 * <br> --- | 1, 2, 4, 10, 11 | A01G9/02 <br> A01G13/02 |
| Y | GB-A-2111813 (DR RICHARD WILLIAM) <br> * das ganze Dokument * <br> --- | 1, 2 | |
| Y | DE-U-8700052 (BÜNGENS) <br> * Seite 6, Absätze 2 - 3 * <br> * Seite 10, Absatz 2; Figur 4 * | 10, 11 | |
| A | <br> --- | 1 | |
| Y | US-A-4712329 (ANDERSON) <br> * das ganze Dokument * | 4 | |
| A | <br> --- | 1 | |
| A | US-A-3571972 (CARTER) <br> * das ganze Dokument * <br> --- | 1, 7 | |
| A | US-A-3940884 (MASON) <br> * das ganze Dokument * <br> ----- | 1, 10 | RECHERCHIERTE SACHGEBIETE (Int. Cl.5) <br><br> A01G |

Der vorliegende Recherchenbericht wurde für alle Patentansprüche erstellt

| Recherchenort | Abschlußdatum der Recherche | Prüfer |
|---|---|---|
| DEN HAAG | 20 OKTOBER 1989 | HERYGERS J.J. |